# EUROPEAN PATENT APPLICATION

(11) **EP 4 778 398 A1**
(43) Date of publication of application: **22.07.2026**
(21) Application number: 25224251.6
(22) Date of filing: 17.12.2025
(51) Int. Cl.: A23G 1/18, A23G 1/00

(54) **MACHINE FOR CONTINUOUS TEMPERING OF CHOCOLATE**

(30) Priority: 16.01.2025 IT 202500000669
(71) Applicant: Selmi S.r.l., 12042 BRA (CN) (IT)
(72) Inventor: SELMI, Mr. Paolo, I-12042 Bra (Cuneo) (IT)
(74) Representative: Buzzi, Notaro & Antonielli d'Oulx S.p.A.

(57) **Abstract**

A tempering machine (10) is described comprising:
- a tank (40), inside which an agitating tool (36) is arranged mounted rotatably inside the tank around a first rotation axis (I);
- a conduit (50) extending upwards, preferably in a vertical direction, to above said tank (40), which is in fluid communication with the inside of said tank (40) so as to receive, at its lower end (52), chocolate coming from said tank (40),
inside said conduit (50) being mounted rotatably, around a second rotation axis (II), a conveying element (32), which is configured to transport the chocolate along said conduit (50) to a dispensing mouth (60) configured to pour the chocolate back inside said tank (40) ;

The machine is characterized in that said tank (40) comprises a bottom (62) inclined

## Description

The present invention relates to a machine for continuous tempering of chocolate.

In particular, the tempering machine described herein is of the type comprising:
- a tank, inside which an agitating tool is arranged mounted rotatably inside the tank around a first rotation axis;
- a conduit extending upwards, preferably in a vertical direction, to above said tank, which is in fluid communication with the inside of said tank so as to receive, at its lower end, chocolate coming from said tank,
inside said conduit being mounted rotatably, around a second rotation axis, a conveying element configured to transport the chocolate along said conduit to a dispensing mouth configured to pour the chocolate back inside said tank.

A tempering machine of the type indicated above is, for example, described in the European patent EP2476319B1 owned by the same Applicant.

In a tempering machine according to the prior art, it is necessary to verify that the level of chocolate inside the tank is above a predefined minimum level, as otherwise, it may happen that the chocolate treated by the machine tends to incorporate air bubbles, which can affect the quality of the final chocolate product.

In this context, the present invention has the object of producing a tempering machine that is, on the contrary, less subject to the aforementioned drawback.

A further object of the present invention is to produce a tempering machine having a simple and reliable structure.

This object is achieved by means of a tempering machine having the characteristics of claim 1.

The claims form an integral part of the teachings provided herein.

Further characteristics and advantages of the present invention will be apparent from the following description with reference to the attached drawings, provided purely by way of non-limiting example, in which:

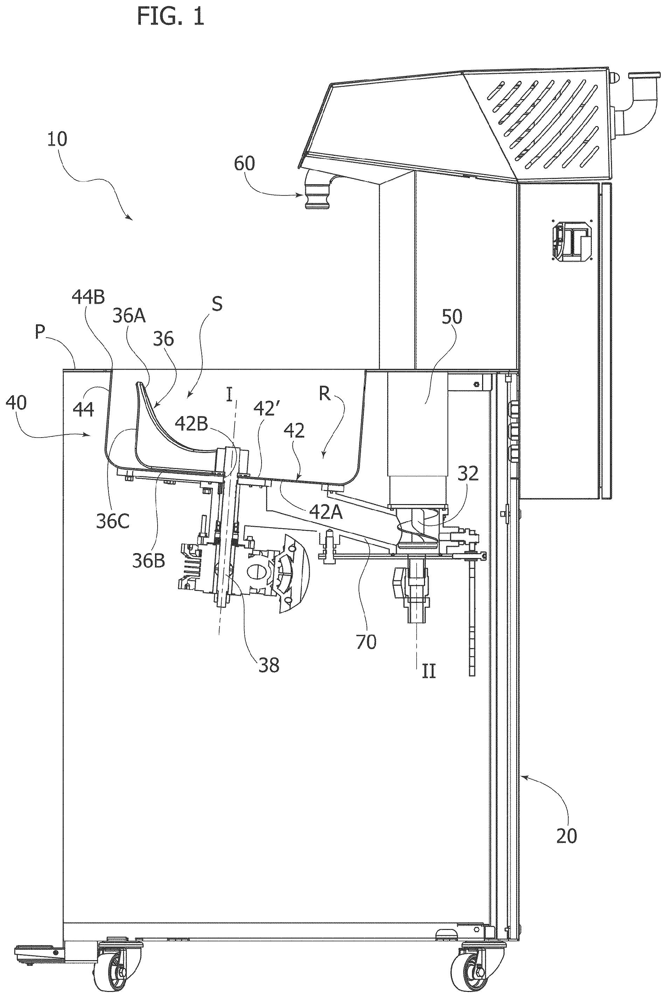

- figure 1 schematically represents an example of an embodiment of the tempering machine described herein.

In the following description, various specific details are illustrated aimed at an in-depth understanding of the embodiments. The embodiments can be realized without one or more of the specific details, or with other methods, components or materials etc. In other instances, known material structures or operations are not shown or described in detail to avoid obscuring various aspects of the embodiment.

The references used herein are for convenience only and thus do not define the scope of protection or the scope of the embodiments.

With reference to figure 1, this illustrates an example of the tempering machine described herein, indicated overall in the figure with the reference number 10.

In one or more preferred embodiments, like the one illustrated, the tempering machine 10 comprises a supporting structure 20 on which a tank 40, a conduit 50, preferably vertical, and a dispensing mouth 60 are mounted.

The tank 40 is configured to receive inside it a given maximum quantity of chocolate to be subjected to a tempering process performed by the machine itself during its working cycle. The tempering machine 10 can however also operate with the tank 40 containing a quantity of chocolate lower than said maximum quantity, and down to a minimum quantity, as will be better explained below.

In general, the tank 40 comprises a bottom 42 and a lateral wall 44 which, together, define an internal space S free for the reception of the chocolate.

The bottom 42 has an opening 42A, which is connected to a lower end 52 of the vertical conduit 50 via a connecting tube 70.

Inside the conduit 50 is arranged a conveying element 32, preferably an auger, which is rotatable around a rotation axis II, vertical, and is configured to transport the chocolate along the conduit 50, from its lower end 52 to the dispensing mouth 60, the latter being connected to an upper end (not visible in the figure) of the conduit 50.

The auger conveying element 32 can be driven by an electric motor (not visible in the figure). The mounting of the auger conveying element 32 inside the conduit 50 can be realized according to the teachings of the patent EP2476319B1 owned by the same Applicant.

Inside the tank 40 is arranged an agitating tool 36, which is movable in rotation around a rotation axis I, driven by an electric motor 38 disposed below the tank 40.

In one or more preferred embodiments, like the one illustrated, the agitating tool 36 is fixed to the upper end of a rotatable shaft 38 which is disposed aligned with the rotation axis I and which protrudes inferiorly from the bottom 42 passing through an opening 42B made at the center of the bottom 42. The shaft 38 is in turn operatively connected to the motor 36 to be drivable in rotation around the rotation axis I.

The agitating tool 36 comprises one or more agitating elements 36A configured to perform a mixing action of the chocolate contained inside the tank 40, as a result of a rotation of the agitating tool 36 around the rotation axis I.

In one or more preferred embodiments, like the one illustrated, each agitating element 36A has a generic L-shaped conformation so as to have a first portion 36B substantially parallel to the bottom 42, and a second portion 36C substantially parallel to the lateral wall 44.

In one or more preferred embodiments, like the one illustrated, the agitating element 36A is configured so that the respective portions 36B, 36C move close to the bottom 42 and the lateral wall 44, respectively, as a result of the rotation of the agitating tool 36 around the rotation axis I.

In a per se conventional manner, in the operation of the tempering machine 10, the tank 40 is first filled with a predefined quantity of chocolate.

Once the molten state is reached, the chocolate poured into the tank 40 is then subjected to a circulation comprising i) the transfer of the chocolate from the inside of the tank 40 to the lower end 52 of the conduit 50, along the connecting tube 70, ii) the lifting of the chocolate along the conduit 50 as a result of the action of the auger conveying element 32, and finally iii) the dispensing of the chocolate through the outlet mouth 60, back inside the tank 40. Incidentally, it is noted that the transfer of the chocolate along the connecting tube 70 occurs mainly due to the force of gravity.

Meanwhile, inside the tank 40 the agitating tool 34 is driven according to a continuous rotational movement around the rotation axis I, to subject the entire chocolate content of the tank to a gentle mixing action useful both for distributing the chocolate poured back into the tank, and for controlling the production of chocolate crystals.

During the treatment described above, the chocolate is first heated to a temperature normally between 40°C and 55°C, to assume a completely molten state.

Subsequently, the chocolate is brought to a temperature usually in the range between 26°C and 30°C and maintained at that temperature until the end of the treatment.

For this purpose, as per se known, the tempering machine 10 can comprise a thermal conditioning system which is associated with the tank 40 and the conduit 50 for the purpose of controlling the temperature of the chocolate in the manner indicated above.

According to an important characteristic of the solution described herein, the bottom 42 of the tank 40 is inclined relative to a horizontal direction, so as to have a region R lowered vertically relative to the other regions of the same bottom.

The opening 42A made on the bottom 42 is positioned precisely in the lowered region R, so that the tank 40 is in fluid communication with the conduit 50 through the same region R.

In one or more preferred embodiments, like the one illustrated, the bottom 42 appears in the form of a circular disk 42', preferably flat, whose geometric axis is inclined relative to a vertical direction so as to define said vertically lowered region R.

Preferably, the geometric axis of the disk 42' is inclined, relative to the vertical, by an angle between 1° and 45°, even more preferably between 2° and 10°.

In one or more preferred embodiments, like the one illustrated, the geometric axis of the circular disk 42' coincides with the rotation axis I, so that the same rotation axis I (and consequently also the shaft 38) is inclined relative to a vertical direction.

The opening 42B evidently constitutes a central opening of the disk 42'.

In view of the above, the vertically lowered region R defines the lowest point of the tank 40, where the chocolate tends to accumulate as the level of the chocolate content inside the tank decreases.

This ensures that the opening 42A, made in the same region R, is always kept covered by chocolate, even when its level inside the tank is low, and thus it is avoided that the treated chocolate incorporates air inside it, thereby preventing the drawback of the prior art discussed at the beginning of the present description.

Returning to the prior art solution with a tank having a horizontal bottom, it can instead be observed that, when the level of chocolate inside the tank falls below a certain threshold, it may happen that the chocolate outlet opening made on the same bottom is exposed to the air in a rhythmic and repeated manner, at each passage of the agitating tool, this favoring the incorporation of air into the chocolate.

On the contrary, thanks to the characteristics illustrated above, the tempering machine described herein is less subject to the occurrence of this type of drawback.

Furthermore, the inclination of the bottom 42 determines a greater hydrostatic pressure at the opening 42A, which favors the flow of chocolate towards the conduit 50, especially in cases where the level of chocolate inside the tank is low.

Thanks to this, the tank 40 of the tempering machine described herein is also capable of ensuring a constant flow rate for the chocolate that is taken from the tank and fed through the conduit 50, this allowing to conduct a tempering operation constant over time, without thermal imbalances, which would instead occur in the case of a variable flow rate of the chocolate.

On the contrary, it is observed that, to guarantee such constant operation over time, the tempering machines of the prior art must instead necessarily always operate with the tank filled with chocolate at least to half of its internal volume.

It is further observed that the inclined bottom 42 facilitates the cleaning of the tank, since the emptying of the chocolate through the opening 42A becomes faster, and the washing operation is simplified by the fact that the chocolate does not tend to remain on the edges and the washing water can also be easily discharged through the opening 42A.

In one or more preferred embodiments, like the one illustrated, the lateral wall 44 of the tank 40 has a cylindrical conformation whose geometric axis coincides with the geometric axis of the circular disk 42' (and therefore also with the rotation axis I). Therefore, the lateral wall 44 is also inclined relative to a vertical direction.

In one or more preferred embodiments, like the one illustrated, the lateral wall 44 likewise has an upper edge 44B, continuous and closed, which is entirely contained on a same horizontal plane P, which may correspond to a physical horizontal plane, presented by the tempering machine 10 in an upper region thereof.

To realize such an edge, the height of the lateral wall 44, measured relative to the bottom 42, varies as a function of the position around the rotation axis I (i.e., around the geometric axis of the disk 42'), precisely so that the upper edge 44B lies on the horizontal plane P along its entire length.

In one or more preferred embodiments, like the one illustrated, the bottom 42 and the lateral wall 44 are constituted by two distinct bodies, manufactured individually, which are then joined together according to known methods, for example via a welding operation.

Naturally, the principle of the invention remaining firm, the details of construction and the embodiments may vary, even significantly, with respect to what has been illustrated herein purely by way of non-limiting example, without thereby departing from the scope of the invention, as defined by the attached claims.

## Claims

1. Tempering machine (10) for continuous tempering of chocolate, comprising:
- a tank (40), inside which an agitating tool (36) is arranged mounted rotatably inside the tank around a first rotation axis (I);
- a conduit (50) extending upwards, preferably in a vertical direction, to above said tank (40), which is in fluid communication with the inside of said tank (40) so as to receive, at its lower end (52), chocolate coming from said tank (40),
inside said conduit (50) being mounted rotatably, around a second rotation axis (II), a conveying element (32), which is configured to transport the chocolate along said conduit (50) to a dispensing mouth (60) configured to pour the chocolate back inside said tank (40) ;
**characterized in that**
said tank (40) comprises a bottom (62) inclined relative to a horizontal direction, so as to have a region (R) lowered vertically relative to the other regions of the tank bottom, and **in that**, at said vertically lowered region, an opening (42A) is made on said bottom (42) configured to place the inside of said tank in fluid communication with said conduit (50).

2. Machine according to claim 1, wherein said bottom (42) comprises a circular disk (42'), preferably flat, whose geometric axis is inclined relative to a vertical direction so as to define said vertically lowered region (R).

3. Machine according to claim 2, wherein the geometric axis of said circular disk (42') coincides with said first rotation axis (I).

4. Machine according to claim 3, comprising a connecting tube (70) which connects said opening (42A) made on said bottom (42) to the lower end (52) of said conduit (50) and which is configured to feed the chocolate exiting from the tank (40) through said opening (42A), to the lower end (52) of said conduit (50), by gravity.

5. Machine according to claim 3 or 4, wherein said circular disk (42') has a central opening (42B) traversed by a shaft (38) rotatable around said first rotation axis (I), by which said agitating tool (36) is carried.

6. Machine according to claim 5, comprising a motor for driving said agitating tool (36), which is fixed to said bottom (42) of said tank, on its respective external, lower side.

7. Machine according to any one of the preceding claims, wherein said first rotation axis (I) is inclined relative to said second rotation axis (II).

8. Machine according to any one of claims 2 to 6, wherein said tank (40) comprises a lateral wall (44) having a general cylindrical conformation whose geometric axis coincides with the geometric axis of said circular disk (42') of said bottom (42), and wherein the height of said lateral wall (44), measured relative to the bottom (42) of said tank (40) varies as a function of the position around said geometric axis so that said lateral wall (44) has an upper edge (44B) entirely contained on a same horizontal plane (P).

9. Machine according to any one of the preceding claims, wherein said agitating tool (36) comprises one or more agitating elements (36A) which protrude radially relative to said first rotation axis (I) and move close to said bottom (42).

10. Machine according to claim 9, wherein each agitating element (36A) comprises a first portion (36B) substantially parallel to the bottom (42) of said tank, and a second portion (36C) substantially parallel to the lateral wall (44) of said tank, and wherein said agitating element (36A) is configured so that said first and second portions (36B, 36C) move close to said bottom (42) and to said lateral wall (44), respectively, as a result of a rotation of the agitating tool (36) around said first rotation axis (I).

11. Machine according to any one of the preceding claims, comprising a thermal conditioning system for thermally conditioning the lateral wall of said tank and said conduit so as to heat and/or cool the chocolate contained in said tank and the chocolate passing through said conduit, during the operation of the machine.
